# EUROPEAN PATENT APPLICATION

(11) **EP 4 300 056 A1**
(43) Date of publication of application: **03.01.2024**
(21) Application number: 22181564.0
(22) Date of filing: 28.06.2022
(51) Int. Cl.: G01J 1/42, G02F 1/29, G02F 1/33, H04B 10/70, G01J 1/44

(54) **HIGH TIME RESOLVING SINGLE PHOTON DETECTION**

(71) Applicant: Fraunhofer-Gesellschaft zur Förderung der angewandten Forschung e.V., 80686 München (DE)
(72) Inventor: Steinlechner, Fabian, 07745 Jena (DE); CABREJO PONCE, Meritxell, 07743 Jena (DE); GONZALEZ MARTIN DEL CA, Luis Javier, 07747 Jena (DE)
(74) Representative: Louis Pöhlau Lohrentz

(57) **Abstract**

It is claimed a method for high time resolving single photon detection, preferably for quantum computing and/or quantum communication, comprising a detector array (1) with two or more single photon detectors (2) and a deflection means (3), whereby the method comprises the steps
i) transmission of the single photon to the detector array (1),
ii) detection of the single photon at one single photon detector (2) of the detector array (1).

According to the invention, the single photon is transmitted in step i) through the deflection means (3) to the detector array, and
the deflection means (3) routes the single photon in step i) to one of the single photon detectors (2) of the detector array (1) in order to enable the detection of the single photon.

## Description

The present invention provides a method for high time resolving single photon detection according to the preamble of claim 1 and a system for high time resolving single photon detection according to the preamble of claim 11.

The temporal resolving power of single photon detectors is one of the major limitations for the maximum achievable photon pulse repetition rate and single photon detection rate in a quantum optical application, especially in quantum computing and quantum communication, for example quantum key distribution (QKD).

Several single photon detector technologies already exist: for example, Single-Photon Avalanche Diodes (SPAD), Nanowire Detectors (SSNSPD), Multi-Channel Plates, and transition edge sensors (TES). Each of these detector technologies is capable of converting single photon pulses with a certain temporal resolving power into an electrical pulse form. The temporal resolving power in these detectors is limited among other things by the recovery time of the detector and to a certain uncertainty of the detection.

The recovery time of the detector is called dead time. The dead time is a time interval of the detector after the detection of a single photon in which no detection is possible. During this time, the detector is blind to incoming single photons. The dead time can be reduced by a modification of the electronic behavior of the detector, which leads to a higher afterpulsing probability and a lower quantum efficiency of the detector.

The uncertainty of the detector is called timing jitter. Timing jitter is the time deviation from an ideal single photon response voltage pulse of the single photon detector. The timing jitter limits the fidelity of each time-correlated single photon quantum application. One method to reduce the timing jitter is to reduce the photon sensitive area of the detector, whereby, however, the detection efficiency is reduced due to coupling problems of the single photons on the smaller photon sensitive area.

It is an object of the present invention to provide an improved, more precise and more efficient system and method for high time resolving single photon detection, preferably for quantum computing and/or quantum communication.

According to the present invention, a method for high time resolving single photon detection is provided according to claim 1.

This object is achieved by a method for high time resolving single photon detection, preferably for quantum computing and/or quantum communication, comprising a detector array with two or more single photon detectors and a deflection means, whereby the method comprises the steps
i) transmission of the single photon to the detector array,
ii) detection of the single photon at one single photon detector of the detector array.

According to the invention, the single photon is transmitted in step i) through the deflection means to the detector array, and
the deflection means routes the single photon in step i) to one of the single photon detectors of the detector array in order to enable the detection of the single photon.

The object is further achieved by a system for high time resolving single photon detection according to claim 11.

The object is further achieved by a system for high time resolving single photon detection, preferably for quantum computing and/or quantum communication, comprising a detector array and a deflection means,
whereby the detector array comprises two or more single photon detectors. According to the invention, the deflection means is arranged in front of the detector array in order to transmit the single photon through the deflection means to the detector array, and
the deflection means comprises one or more electro-optical modulator/s, and/or the deflection means comprises one or more acousto-optic modulator/s,
in order to route the single photon to one of the single photon detectors of the detector array which is able to detect the single photon.

An advantage of the inventive method and the inventive system is the routing of the single photon itself towards one of multiple single photon detectors of the detector array, making the method and the system compatible with single photon detectors independent of their detector technologies.

An advantage of the inventive method and the inventive system is the use of multiple single photon detectors in the detector array and the ability of routing the single photons to one of the single photon detectors which is capable and ready to detect the single photon.

Detection of the single photon means, preferably in step ii), that the single photon is detected at the one detector, which is a ready detector. Enable a detection, or to be able to detect the single photon means, preferably in step ii), that the single photon detector is in a state in which the single photon detector can detect single photons. That means the single photon detector is not in its dead time. In contrast to that, when a single photon detector is in its dead time the single photon cannot be detected. The time interval of the dead time is the time interval in which the single photon detector cannot detect incoming photons. In a preferred embodiment, preferably in step i), the single photon detector able to detect a single photon is called a ready detector. That means the ready single photon detector is not in its dead time. That means, the dead time because of the last detection of the last single photon in this single photon detector is past.

In a preferred embodiment, the single photon in step i) is routed by the deflection means by a voltage dependent refraction, preferably in one or more electro-optical modulators, and/or the single photon in step i) is routed by the deflection means by an acoustic frequency dependent diffraction, preferably in one or more acousto-optic modulators.

The advantage of the voltage dependent refraction, preferably in one or more electro-optical modulators, and/or the acoustic frequency dependent diffraction, preferably in one or more acousto-optic modulators is the high speed of the switching of the deflection means and that this system is an active switching method, not depending on a probabilistic distribution of the single photons by passive optical elements.

In a preferred embodiment, the electro-optical modulator is an electro-optical deflector. In the electro-optical modulator, the voltage dependent refraction by the electro-optical effect in the electro-optic material is used to route the single photon. The routing in the electro-optical modulator is controlled by and/or dependent on a voltage signal.

In a preferred embodiment, the acousto-optic modulator is an acousto-optic deflector. In the acousto-optic modulator, the acoustic frequency dependent diffraction angle of single photons, for example in a quartz crystal, is used to route the single photon. The routing in the acousto-optic modulator is controlled by and/or dependent on a frequency signal.

In a preferred embodiment, the routing of the single photon in step i) is controlled by a control signal *s*, preferably by a time-dependent control signal *s*(*t*), more preferably by a periodical time-dependent control signal *sₚ*(*t*)*.* In a preferred embodiment, the deflection means is controlled by a control signal *s*, preferably by a time-dependent control signal *s*(*t*), more preferably by a periodical time-dependent control signal *sₚ*(*t*)*.*

In a preferred embodiment, the control signal *s* is the voltage signal for one or more electro optical modulators, and/or the control signal *s* is the frequency signal of the one or more acousto-optic modulators.

In a preferred embodiment, the routing in step i) is dependent on the wavelength of the single photon. In a preferred embodiment, the control signal *s* depends on the wavelength of the single photon.

In a preferred embodiment, the control signal *s*
a) is triggered by and/or synchronized with a pulsed single photon source, and/or
b) is triggered by and/or synchronized with the detector array, preferably with the ready single photon detectors of the detector array, and/or
c) is generated in a signal generator, preferably is a periodical time-dependent control signal *sₚ*(*t*)*.*

In a preferred embodiment, the system for high time resolving single photon detection comprises in addition,
a) an electronic means of a pulsed single photon source in order to trigger and/or synchronize the deflection means with the pulses of the single photon source, and/or
b) an electronic means of the detector array in order to trigger and/or synchronize the deflection means with the detector array, preferably with the ready single photon detectors of the detector array, and/or
c) an electronic means with a signal generator, in order to generate a control signal *s*, preferably a periodical time-dependent control signal *sₚ*(*t*), for the deflection means.

In a preferred embodiment, the control signal *s* depends
a) on a repetition rate of the pulsed single photon source, and/or
b) on a dead time of the single photon detectors of the detector array, preferably on the longest dead time, and/or
c) on a timing jitter of the single photon detectors of the detector array, preferably on the longest timing jitter.

In a preferred embodiment, the resolving time is increased by routing single photons to one of the ready single photon detectors, preferably by skipping single photon detectors which are in their dead time. In a preferred embodiment, the resolving time is increased by a reduction of the timing jitter by mapping the transit time of the single photon through the deflection means on the detector array.

In a preferred embodiment, the routing of the deflection means is controlled by the electronic means. In a preferred embodiment, the electronic means generates the control signal *s*.

In a preferred embodiment of the embodiments of a) and/or b), the electronic means is arranged in or outside of the pulsed single photon source and/or the detector array.

In a preferred embodiment of the embodiments of a) and b), or a) and c), or b) and c), or a) and b) and c), the system comprises only one electronic means, whereby the one electronic means enables all embodiments a) and b), or a) and c), or b) and c), or a) and b) and c).

In a preferred embodiment, the pulsed single photon source generates single photons with the period of the periodical time-dependent control signal *sₚ*(*t*)*.*

In a preferred embodiment, the control signal *s* is dependent on the dead time of the single photon detectors of the detector array divided by the number of the single photon detectors, preferably by the largest dead time of the single photon detectors of the detector array.

In a preferred embodiment of a), the single photon in each pulse is routed to one of the ready single photon detectors. The advantage of this embodiment is to enable a high time resolving single photon detection by using a ready detector while another detector of the detector array is in its recovery mode. In this embodiment, the pulse repetition rate is smaller than the dead time of the single photon detectors divided by the number of the single photon detectors.

In a preferred embodiment of b), the single photon is routed to one of the ready single photon detectors. The advantage of this embodiment is to enable a high time resolving single photon detection by using a ready detector while another detector of the detector array is in its recovery mode.

In a preferred embodiment of c), the single photon is routed to one of the single photon detectors dependent on the transit time of the single photon through the deflection means by the periodically time-dependent control signal *sₚ*(*t*)*.*

The advantages of the embodiments of a), b), and/or c) is to increase the resolving time of the single photon detection by reducing or avoiding the dead time of not ready single photon detectors by routing the single photons to ready single photon detectors, and/or by a high-resolution detection of the single photon dependent on the transit time of the single photon through the deflection means.

In a preferred embodiment, multiple single photons are transmitted through the deflection means and are detected at the detector array. In a preferred embodiment, the multiple single photons are transmitted one after the other, preferably are transmitted in pulses one after the other. Preferably, in each pulse or in the most pulses a single photon is arranged. Pulses of single photon means here that the single photons are temporally arranged one after the other in distant time windows.

In a preferred embodiment, the pulses single photon source is an on demand single photon source, preferably a quantum dot, and/or is an attenuated pulsed laser, and/or a pulsed entangled photon source, and/or an entangled photon source using one photon of each pair as trigger.

In a preferred embodiment, the control signal *s* is a single-tone signal, and/or a sinusoidal signal, and/or a sawtooth pattern signal, and/or a pulsed signal with constant intensity, and/or a pulsed signal with a single-tone shape, and/or pulsed signal with a sinusoidal shape, and/or a pulsed signal with sawtooth shape.

In a preferred embodiment, the control signal *s* is a steady or an unsteady signal. The advantage of the unsteady signal is a possible skipping of areas between single photon detectors which are arranged next to each other with a gap in between. The advantage of the electro-optical modulator, and/or acousto-optic modulators is the fast routing of single photons even by unsteady control signals.

In a preferred embodiment, the electronic means comprises a signal generator.

In a preferred embodiment, routing of the single photon means a change of the angle of the path of the single photon, preferably due to the control signal *s*. In a preferred embodiment, the change of the path of the single photon depends on the voltage dependent refraction and/or the acoustic frequency dependent diffraction. In a preferred embodiment, the path of flight of the single photon is changed by the deflection means. In a preferred embodiment, the electro-optical modulators and/or the acousto-optic modulators enable a spatial deflection of the single photon path.

In a preferred embodiment, the multitude of electro-optical modulators, and/or acousto-optic modulators are arranged spatially one after the other.

In a preferred embodiment with a multitude of electro-optical modulators and/or acousto-optic modulators, the single photon is transmitted through the multitude of electro-optical modulators and/or acousto-optic modulators one after the other.

In a preferred embodiment with a multitude *i* of electro-optical modulators and/or acousto-optic modulators, the routing by each electro-optical modulator and/or acousto-optic modulator is realized by an individual signal *sᵢ* each.

In a preferred embodiment, the routing of the single photon is realized in one dimension. For example, the routing is realized in a horizontal plane. For a one-dimensional routing, the single photon detectors are for example arranged horizontally next to each other.

In a preferred embodiment, the routing of the single photon is realized in two dimensions. For two-dimensional routing the single photon detectors are for example arranged horizontally next to each other with multiple rows of single photon detectors on top of each other. In a preferred embodiment, for a two-dimensional routing one electro-optical modulator or one acousto-optic modulator is used with a corresponding control signal *s*, or two or more electro-optical modulators and/or two or more acousto-optic modulators are used with multiple control signal *sᵢ*.

In a preferred embodiment, the single photon detectors are Single-Photon Avalanche Diodes (SPAD), and/or Nanowire Detectors (SSNSPD), and/or Multi-Channel Plates, and/or transition edge detectors (TES).

In a preferred embodiment, the detector array comprises two single photon detectors, or three single photon detectors, or four single photon detectors, or five single photon detectors, or multiple single photon detectors.

In a preferred embodiment, between the deflection means and the detector array one or more guidance means are arranged in order to guide the single photon from the deflection means to the single photon detectors of the detector array. In a preferred embodiment the guidance means is/are one or more lenses, and/or one or more lens systems, and/or one or more fibers.

In a preferred embodiment with guidance means, the routing of the single photon to the single photon detectors is replaced by a routing of the single photons to the guidance means.

In a preferred embodiment, in front of the deflection means, optical components are arranged in order to direct the single photon through the deflection means, preferably one or more lenses, or a lens system.

In a preferred embodiment, the transmission in step i) is a guided transmission and/or a not guided transmission. Guided means here, that in one or more sections of the transmission the single photon is guided, preferably in a fiber or a waveguide. Not guided means here, that in one or more sections of the transmission the single photon is not guided, preferably via free space or a not guiding optical component.

In a preferred embodiment of a method with any of the embodiments of c), after the detection in step ii) an additional step is performed:
iii) calculation of a high-resolution detection time *tₕᵣ* of the single photon, preferably in the electronic means.

In a preferred embodiment of the method with any of the embodiments of c), in step i) the single photon is routed by the deflection means, whereby the routing of the single photon is time-dependent on the transit time of the single photon through the deflection means by a time-dependent control signal *s*(*t*) of the deflection means, and
in step ii) the single photon is detected at the one single photon detector of the detector array at a detection time *t* with a detection time uncertainty Δ*t*, and in step iii) the calculation of the high-resolution detection time *tₕᵣ* with a high-resolution detection time uncertainty Δ*tₕᵣ* of the single photon is based on the detection time *t* of the one single photon detector and the time-dependent control signal *s*(*t*) of the deflection means.

In a preferred embodiment of the system with any of the embodiments of c), the system comprises in addition an electronic means, and the deflection means enable a time-dependent routing of the single photon by a time-dependent control signal *s*(*t*) and a detection of the single photon at a detection time *t* on one single photon detector of the detector array, and
the electronic means is connected with the deflection means and the detector array in order to calculate a high-resolution detection time *tₕᵣ* of the single photon with a high-resolution detection time uncertainty Δ*tₕᵣ* of the single photon which is based on the detection time *t* of the one detector and the time-dependent control signal *s*(*t*) of the deflection means.

An advantage of an embodiment with any of the embodiments of c), is the increase of the temporal resolving time of the single photon detectors. The time-dependent control signal *s*(*t*) leads to a time dependent routing of the single photon based on the transit time of the single photon through the deflection means, and thus the transit time of the single photon through the deflection means is mapped to the one single photon detector. By that, the detection time uncertainty Δ*t* can be decreased by a factor according to the number of single photon detectors in the detector array.

In a preferred embodiment with any of the embodiments of c), by the time-dependent control signal *s*(*t*) the transmission of the single photon through the deflection means at a particular time (transit time) results in a routing of the single photon and a detection of the single photon at a particular single photon detector of the detector array. That means, by the knowledge of the detection time *t* and on which detector the single photon was detected and the knowledge of the time-dependent control signal *s*(*t*) the high-resolution detection time *tₕᵣ* of the single photon can be calculated with a high-resolution detection time uncertainty Δ*tₕᵣ*. That means, by the time dependent control signal the transit time of the single photon through the deflection means is assigned to the detection of the single photon on one of the detectors of the detection means.

In a preferred embodiment with any of the embodiments of c), the high-resolution detection time *tₕᵣ* is a time with a high-resolution detection time uncertainty *Δtₕᵣ,* whereby the high-resolution detection time *tₕᵣ* is arranged in the window of the detection time uncertainty Δ*t* of the detection time *t.* The arrangement in the window of the detection time uncertainty Δ*t* is based on the time-dependent control signal *s*(*t*), and preferably on which single photon detector the single photon is detected.

In a preferred embodiment with any of the embodiments of c), the period of the time-dependent control signal *s*(*t*) is equal to the detection time uncertainty Δ*t*.

In a preferred embodiment with any of the embodiments of c), the high-resolution detection time uncertainty Δ*tₕᵣ* is smaller than the detection time uncertainty Δ*t*. In a preferred embodiment, the high-resolution detection time uncertainty Δ*tₕᵣ* is smaller than the detection time uncertainty Δ*t* by a factor of the number of single photon detectors of the detector array.

In a preferred embodiment with any of the embodiments of c), the detection time uncertainty Δ*t* is a timing jitter of the one detector of the detector array.

In a preferred embodiment with any of the embodiments of c), the detection of the single photon at one single photon detector means, that the calculation in step iii) is in addition based on which of the single photon detectors of the detector array the single photon is detected. For example, for a detector array with two single photon detectors and a linear increasing time-dependent control signal *s*(*t*) the routing, that means change of the angle of the single photon path increases linear with the transit time (early or late) of the single photon through the deflection means. The routing determines on which detector the single photon is detected. In the early time transit (first half of the periodical time-dependent control signal *s*(*t*)) the single photon is routed towards and detected at the first single photon detector by only a small angle change of the single photon path. In the late time transit (second half of the periodical time-dependent control signal *s*(*t*)) the single photon is routed towards and detected at the second single photon detector by a larger angle change of the single photon path. Thus, by the knowledge of the time-dependent control signal *s*(*t*) and on which single photon detector the single photon was detected, the high-resolution detection time *tₕᵣ* can be calculated. For example, by a detection at the first detector, the high-resolution detection time *tₕᵣ* is now in the first half of the detection time uncertainty Δ*t* of the detection time *t* and the high-resolution detection time *tₕᵣ* now has a high-resolution detection time uncertainty Δ*tₕᵣ* half of the detection time uncertainty Δ*t*.

In a preferred embodiment with any of the embodiments of c), the detection time *t* is determined by an electrical pulse of the single photon detector, and/or the detection time uncertainty Δ*t* is determined by the timing jitter of the single photon detector.

In a preferred embodiment with any of the embodiments of c), the single photon detectors are arranged in such a way to allow a detection of the single photon dependent on the transit time of the single photon through the deflection means based on the time-dependent control signal *s(t).* In a preferred embodiment, the arrangement is a spatial arrangement.

In a preferred embodiment with any of the embodiments of c), the single photon detectors are arranged in order to determinate the transit time of the single photon through the deflection means dependent on the time-dependent control signal *s*(*t*)*.*

In a preferred embodiment with any of the embodiments of c), the detection time *t* is determined by an electrical pulse of the single photon detector. In a preferred embodiment with any of the embodiments of c), the detection time uncertainty Δ*t* is determined by the timing jitter of the single photon detector.

In a preferred embodiment with any of the embodiments of c), the single photon detectors are arranged in order to cover the possible routing area of the single photon determined by the time-dependent control signal *s*(*t*), preferably to cover most of the possible routing area.

In a preferred embodiment, the single photon detectors are arranged next to each other, preferably in a row next to each other. In a preferred embodiment, the single photon detectors build a two-dimensional detection array.

In a preferred embodiment with any of the embodiments of c) with guidance means, the arrangement of the single photon detectors is replaced by an arrangement of the guidance means and guidance of the single photons to the single photon detectors.

In a preferred embodiment with any of the embodiments of c), for the calculation in step iii) the electronic means receives the time-dependent control signal *s*(*t*), the detection time *t* of the single photon, and preferably the detector on which the photon was detected.

The above and other aspects, features and advantages of the present invention will become more apparent from the following detailed description when taken in conjunction with the accompanying drawings.

### Brief Description of the Drawings:

- Fig. 1:: schematic diagram of a first embodiment of the inventive system for high time resolving single photon detection;
- Fig. 2:: schematic diagram of an embodiment of the inventive system for high time resolving single photon detection with an electronic means in the detector array;
- Fig. 3:: schematic diagram of an embodiment of the inventive system for high time resolving single photon detection with an electronic means in a single photon source;
- Fig. 4:: schematic diagram of an embodiment of the inventive system for high time resolving single photon detection with an electronic means with a signal generator;
- Fig. 5:: schematic diagram of the embodiment of Fig. 2 of the inventive system for high time resolving single photon detection with guidance means;
- Fig. 6:: diagram of two embodiments of a control signal *s*;
- Fig. 7:: diagram of an embodiments of a pulsed control signal *s*;
- Fig. 8:: a schematic time diagram with the detection time *t* and high-resolution detection time *tₕᵣ.*

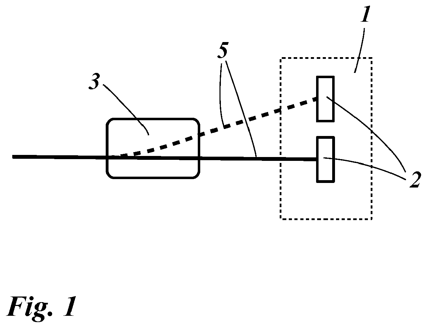

Fig. 1 shows a first embodiment of the inventive system for high time-resolution single photon detection comprising a detector array 1 and a deflection means 3. The detector array 1 in the example of Fig. 1 comprises two single photon detectors 2.

The deflection means 3 routes the single photon to one of the single photon detectors 2 of the detector array 1 via one of the single photon paths 5 in order to enable a detection of the single photon. For that, the single photon is routed to one of the two single photon detectors 2 in the example of Fig. 1 which is capable of detecting the single photons, that means to one of the two single photon detectors 2 which is not in its dead time. The path of the single photon 5 is depicted in Fig. 1 by the dashed line for a single photon routed to the upper single photon detector 2 and by the continuous line for a single photon routed to the lower single photon detector 2.

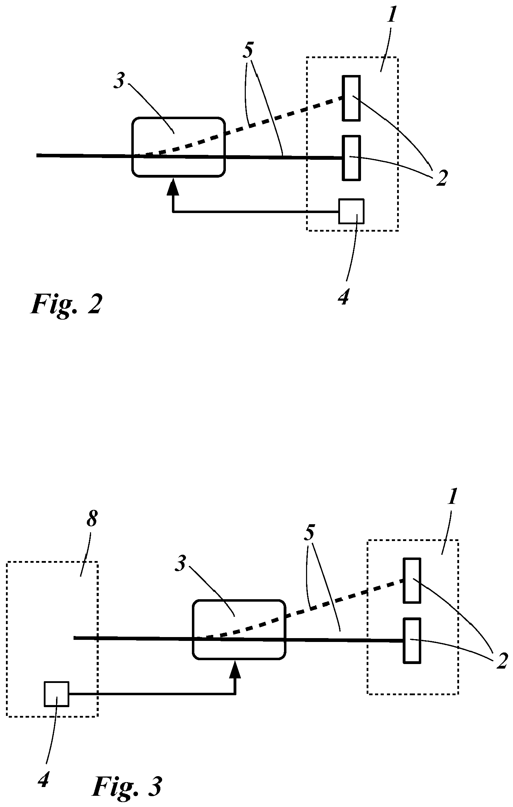

Fig. 2 shows an embodiment of the inventive system for high time resolving single photon detection with an electronic means 4 in the detector array 1. The example of Fig. 2 differs from Fig. 1 only in the electronic means 4 in the detector array 1. The electronic means 4 is connected in Fig. 2 with the deflection means 4, in order to control the deflection means 3 by a control signal *s*, which is generated in the embodiment of Fig. 2 in the electronic means 4 in the detector array 1.

In the example of Fig. 2 the deflection means 3 is controlled by the electronic means 4 in such a way, that a detection of a single photon, for example in the lower single photon detector 2, is communicated to the electronic means 4 and only after the dead time of the lower single photon detector 2 a subsequent single photon is routed to the lower single photon detector 2. While the lower single photon detector 2 is in its dead time, a single photon in this time interval is routed to the upper single photon detector 2. That means while the lower single photon detector 2 is in its dead time, the electronic means 4 generates the control signal *s* in order to route each single photon in that time interval towards the upper single photon detector 2. This routing increases the resolving time of the system by routing the single photon to a ready single photon detector 2.

Fig. 3 shows an embodiment of the inventive system for high time resolving single photon detection with an electronic means 4 in a single photon source 8. The example of Fig. 3 differs from Fig. 1 only in the single photon source 8 and the electronic means 4 in the single photon source 8. The electronic means 4 is connected in Fig. 3 with the deflection means 4, in order to control the deflection means 3 by the control signal *s*, which is generated in the embodiment of Fig. 3 in the electronic means 4 in the single photon source 8.

In this embodiment, the single photon source 8 is a pulsed single photon source, generating single photons with a repetition rate. In order to increase the resolving time of the system, in this embodiment the electronic means 4 generates the control signal *s* in order to route one single photon after each other alternating to the upper single photon detector 2 and the lower single photon detector 2. This routing increases the resolving time of the system by routing the single photon to a ready single photon detector 2.

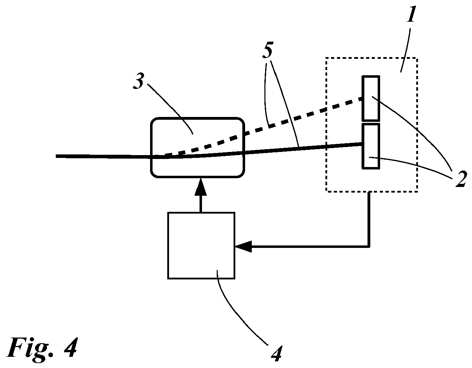

Fig. 4 shows an embodiment of the inventive system for high time resolving single photon detection comprising the detector array 1, the deflection means 3, and the electronic means 4. In this example the electronic means 4 comprises a signal generator.

The detector array 1 in the example of Fig. 4 comprises two single photon detectors 2. The single photon detectors 2 are spatially arranged in such a way, that each single photon transmitted through the deflection means 3 and routed by the control signal *s*, preferably by a time-dependent control signal *s*(*t*) is ether detected at the upper single photon detector 2 or the lower single photon detector 2.

The electronic means 4 is connected in Fig. 4 with the deflection means 4, in order to control the deflection means 3 by the time-dependent control signal *s*(*t*), which is generated in the embodiment of Fig. 3 in the electronic means 4 by a signal generator. In addition, the electronic means 4 is connected with the detector array 1, in order to receive the detection time *t* of the single photon from the single photon detector 2 on which the single photon was detected.

As shown in Fig. 4 the single photon is transmitted on the single photon path 5 through the deflection means 3. In dependence of the transit time of the single photon and the time-dependent control signal *s*(*t*) of the deflection means 3, the path of the single photon is changed by the routing. Fig. 4 shows as an example two different single photon paths 5.

The path of the single photon 5 is depicted in Fig. 4 by the dashed line for a single photon routed to the upper single photon detector 2 by routing with a large angle change of the single photon path 5 and by the continuous line for a single photon routed to the lower single photon detector 2 by routing with a small angle change of the single photon path 5.

The routing of the single photon in the example of Fig. 4 depends on the time-dependent control signal *s*(*t*) and on the transit time of the single photon through the deflection means 3, that means when the single photon is transmitted through the deflection means 3.

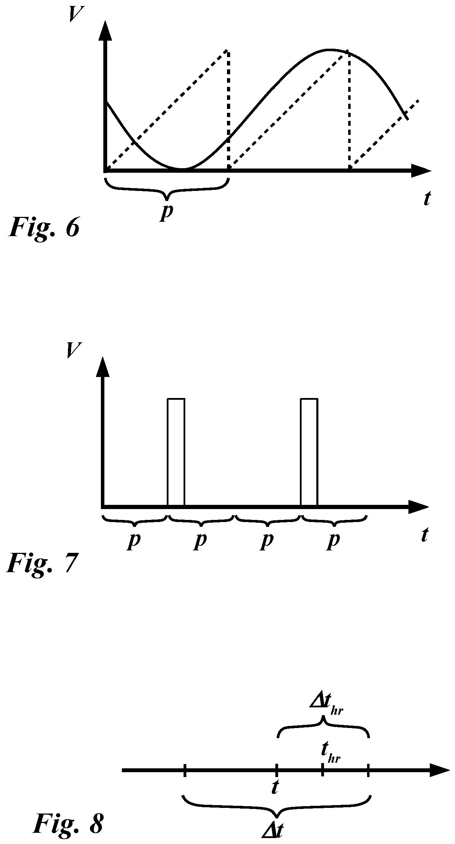

An example of a calculation and increase of the resolving time by a reduction of the timing jitter in the example of Fig. 4 by mapping the transit time of the single photon through the deflection means on the detector array is explained below in Fig. 8.

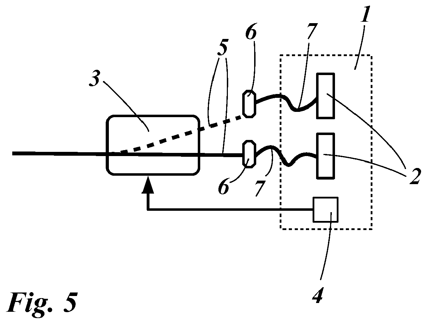

Fig. 5 shows an embodiment of Fig. 2 of the inventive system for high time resolving single photon detection with guidance means arranged between the deflection means 3 and the detector array 1.

The guidance means in the example of Fig. 5 comprises for two single photon detectors 2 two fiber couplers 6 and two fibers 7. In the embodiment of Fig. 5 the two fiber couplers 6 are arranged in such a way, that the single photon transmitted through the deflection means 3 and routed toward the detector array 1 is either detected at the upper single photon detector 2 or the lower single photon detector 2 by coupling of the single photon in one of the fibers 7 by one of the coupling means 6 and the transmission of the single photon via one of the fibers 7 to one of the single photon detectors 2.

Fig. 6 shows a diagram of two embodiments of the time-dependent control signal *s(t).* The first embodiment is a sinusoidal signal. The second embodiment is a sawtooth pattern signal with a period p. The period p is in this embodiment equal to the detection time uncertainty Δ*t* of the single photon detectors 2.

Fig. 7 shows a diagram of a third embodiment of the time-dependent control signal *s(t).* In this embodiment, the time-dependent control signal *s*(*t*) is a periodical and constant signal with a short time window at the beginning of each second period of the generation of a single photon in a pulsed single photon source. By that time-dependent control signal *s*(*t*) the first single photon is routed to the lower single photon detector 2, for example from Fig. 3, and the subsequent single photon is routed to the upper single photon detector 2 by the time-dependent control signal *s*(*t*).

Fig. 8 shows a time diagram of the high-resolution detection time *tₕᵣ* for the embodiment of Fig. 4 with two single photon detectors 2 and a time-dependent control signal *s*(*t*) as sawtooth signal as shown in Fig. 6.

A detection of a single photon at only one single photon detector 2 results in a detection time *t* with a detection time uncertainty Δ*t*. The detection time uncertainty Δ*t* is a result of a time deviation from an ideal single photon response voltage pulse of the single photon detector 2. That means by the electronic time deviation the single photon was actually detected somewhere in the time uncertainty Δ*t* of the detection time *t*, but due to the jitter of the voltage pulse of the single photon detector 2 the exact time cannot be identified.

By the use of the inventive system as shown in Fig. 4 a high time-resolution single photon detection with a time-dependent control signal *s*(*t*) as sawtooth signal as shown in Fig. 6 is realized as described in the following:
The period of the time-dependent control signal *s*(*t*) is in this example equal to the detection time uncertainty Δ*t*. Each period of the time-dependent control signal *s(t)* can be divided into two parts, a first transit time part for a routing of the single photon to the lower single photon detector 2, and a second transit time part for a routing of the single photon to the upper single photon detector 2.

As an example, as shown in Fig. 8, by the detection of the single photon in the upper single photon detector 2, by the sawtooth pattern of the time-dependent control signal *s*(*t*) it can be concluded, that the single photon transit time was in the second part of the period of the time-dependent control signal *s*(*t*), leading to a high-resolution detection time *tₕᵣ* and a shorter high-resolution detection time uncertainty Δ*tₕᵣ* as shown in Fig. 8.

### Reference signs:

- 1: detector array
- 2: detector
- 3: deflection means
- 4: electronic means
- 5: single photon path
- 6: fiber coupler
- 7: fiber
- 8: single photon source

## Claims

1. Method for high time resolving single photon detection, preferably for quantum computing and/or quantum communication, comprising a detector array (1) with two or more single photon detectors (2) and a deflection means (3), whereby the method comprises the steps
i) transmission of the single photon to the detector array (1),
ii) detection of the single photon at one single photon detector (2) of the detector array (1),
**characterized in that**
the single photon is transmitted in step i) through the deflection means (3) to the detector array, and
the deflection means (3) routes the single photon in step i) to one of the single photon detectors (2) of the detector array (1) in order to enable the detection of the single photon.

2. Method according to claim 1,
**characterized in that**
the single photon in step i) is routed by the deflection means (3) by a voltage dependent refraction, preferably in one or more electro-optical modulators, and/or
the single photon in step i) is routed by the deflection means (3) by an acoustic frequency dependent diffraction, preferably in one or more acousto-optic modulators.

3. Method according to one of the claims 1 or 2,
**characterized in that**
the routing of the single photon in step i) is controlled by a control signal *s*, preferably by a time-dependent control signal *s*(*t*), more preferably by a periodical time-dependent control signal *sₚ*(*t*)*.*

4. Method according to one claim 3,
**characterized in that**
the control signal *s*
a) is triggered by and/or synchronized with a pulsed single photon source (8), and/or
b) is triggered by and/or synchronized with the detector array (1), preferably with the one single photon detector (2) of the detector array (1), and/or
c) is generated in a signal generator, preferably is a periodical time-dependent control signal *sₚ*(*t*)*.*

5. Method according to one of the claims 3 or 4,
**characterized in that**
the control signal *s* depends
a) on a repetition rate of the pulsed single photon source (8), and/or
b) on a dead time of the single photon detectors (2) of the detector array (1), preferably on the longest dead time, and/or
c) on a timing jitter of the single photon detectors (2) of the detector array (1), preferably on the longest timing jitter.

6. Method according to one of the claims 1 to 5,
**characterized in that**
the resolving time is increased by routing single photons to one of the ready single photon detectors (2), preferably by skipping single photon detectors (2) which are in their dead time, and/or
the resolving time is increased by a reduction of the timing jitter by mapping the transit time of the single photon through the deflection means (3) on the detector array (1).

7. Method according to one of the claims 1 to 6,
**characterized in that**
the routing of the deflection means (3) is controlled by an electronic means (4), preferably the electronic means (3) generates the control signal *s*.

8. Method according to one of the claims 1 to 7,
**characterized in that**
multiple single photons are transmitted through the deflection means (3) and detected at the detector array (1), preferably the multiple single photons are transmitted one after the other.

9. Method according to one of the claims 4 to 8,
**characterized in that**
with any of the embodiments of c), after the detection in step ii) an additional step is performed:
iii) calculation of a high-resolution detection time *tₕᵣ* of the single photon, preferably in the electronic means (4).

10. Method according to claim 9,
**characterized in that**
with any of the embodiments of c), in step i) the single photon is routed by the deflection means (3), whereby the routing of the single photon is time-dependent on the transit time of the single photon through the deflection means (3) by a time-dependent control signal *s*(*t*) of the deflection means (3), and
in step ii) the single photon is detected at the one single photon detector (2) of the detector array (1) at a detection time *t* with a detection time uncertainty Δ*t*, and
in step iii) the calculation of the high-resolution detection time *tₕᵣ* with a high-resolution detection time uncertainty Δ*tₕᵣ* of the single photon is based on the detection time *t* of the one single photon detector (2) and the time-dependent control signal *s*(*t*) of the deflection means (3).

11. System for high time resolving single photon detection, preferably for quantum computing and/or quantum communication,
comprising a detector array (1) and a deflection means (3),
whereby the detector array (1) comprises two or more single photon detectors (2),
**characterized in that**
the deflection means (3) is arranged in front of the detector array (1) in order to transmit the single photon through the deflection means (3) to the detector array (1), and
the deflection means (3) comprises one or more electro-optical modulator/s, and/or the deflection means (3) comprises one or more acousto-optic modulator/s, in order to route the single photon to one of the single photon detectors (2) which is able to detect the single photon.

12. System according to claim 11,
**characterized in that**
the electro-optical modulator is an electro-optical deflector, and/or
the acousto-optic modulator is an acousto-optic deflector.

13. System according to claim 11 or 12,
**characterized in that**
the deflection means (3) is controlled by a control signal *s*, preferably by a time-dependent control signal *s*(*t*), more preferably by a periodical time-dependent control signal *sₚ*(*t*)*.*

14. System according to claims 11 to 13,
**characterized in that**
the system for high time resolving single photon detection comprises in addition,
a) an electronic means (4) of a pulsed single photon source (8) in order to trigger and/or synchronize the deflection means (3) with the pulses of the single photon source, and/or
b) an electronic means (4) of the detector array (1) in order to trigger and/or synchronize the deflection means (3) with the detector array (1), and/or
c) an electronic means (4) with a signal generator, in order to generate a control signal *s*, preferably a periodical time-dependent control signal *sₚ*(*t*), for the deflection means (3).

15. System according to claims 11 to 14,
**characterized in that**
between the deflection means (3) and the detector array (1) one or more guidance means are arranged in order to guide the single photon from the deflection means (3) to the single photon detectors (2) of the detector array (1).
